# EUROPÄISCHE PATENTANMELDUNG

(11) **EP 2 060 428 A2**
(43) Veröffentlichungstag der Anmeldung: **20.05.2009**
(21) Anmeldenummer: 08019167.9
(22) Anmeldetag: 03.11.2008
(51) Int. Cl.: B60J 7/20

(54) **Vorrichtung zum Abdecken eines Öffnungsquerschnittes eines Ablagebereichs einer Verdeckeinrichtung eines Cabriolets**

(30) Priorität: 16.11.2007 DE 102007055055
(71) Anmelder: Wilhelm Karmann GmbH, 49084 Osnabrück (DE)
(72) Erfinder: Selle, Heinrich, 32549 Bad Oeynhausen (DE); Habacker, Norbert, 49565 Bramsche (DE)

(57) **Zusammenfassung**

Es wird eine Vorrichtung (1A) zum wenigstens teilweisen Abdecken eines Öffnungsquerschnittes eines Ablagebereiches (4) einer Verdeckeinrichtung (2) eines Cabriolets (1) mit wenigstens einem Abdeckelement (7), welches wenigstens zwischen einer den Öffnungsquerschnitt freigebenden und den Öffnungsquerschnitt wenigstens teilweise abdeckenden Position verfahrbar ausgeführt ist, beschrieben. Dem Abdeckelement (7) ist eine Anschlageinrichtung zugeordnet, wobei das Abdeckelement (7) von der Anschlageinrichtung bei einem Fahrzeuginnenraum (5) des Cabriolets (1) überdeckender Verdeckeinrichtung (2) in einer ersten Abdeckstellung und in den Fahrzeuginnenraum (5) freigebendem Betriebszustand der Verdeckeinrichtung (2) in einer zweiten Abdeckstellung gehalten ist.

## Beschreibung

Die Erfindung betrifft eine Vorrichtung zum wenigstens teilweisen Abdecken eines Öffnungsquerschnittes eines Ablagebereiches einer Verdeckeinrichtung eines Cabriolets gemäß der im Oberbegriff des Patentanspruchs 1 näher definierten Art.

Aus der Praxis bekannte Cabrioletfahrzeuge sind üblicherweise mit Abdeckelementen ausgebildet, mittels welchen ein innerhalb einer Fahrzeugkarosserie angeordneter Ablagebereich bzw. eine Querschnittsöffnung des Ablagebereiches bei geöffnetem und/oder bei geschlossenem Fahrzeugdach abgedeckt wird.

Derartige Abdeckelemente sind oftmals mehrteilig ausgeführt, wobei neben sogenannten Hutablagen oder Verdeckkastendeckeln auch sogenannte Gestängeklappen vorgesehen sind, die mit Anschlagpuffern ausgebildet sind. Die an den Gestängeklappen angeordneten Anschlagpuffer sind als Einstellmittel für eine gewünschte Lage der Gestängeklappen in einem Betriebszustand vorgesehen. So sind die Gestängeklappen in ihrer Gebrauchsstellung in einer gewissen Lage zu einem weiteren Fahrzeugteil, beispielsweise einer Hutablage oder einem Verdeckkastendeckel, anordenbar. Hierfür werden die Gestängeklappen über Anschlagpuffer in ihrer Gebrauchsstellung beispielsweise an karosseriefesten Bauteilen abgestützt.

Ein solcher Anschlagpuffer ist im Bereich seiner Anschlagfläche aus einem elastischen Material gefertigt und weist zudem an seinem anderen Ende eine Gewindestange auf, die wiederum in ein Gewinde einer Gestängeklappe eingeschraubt wird. Über diese Ausführung eines Anschlagpuffers ist die Gebrauchsstellung der Gestängeklappe beim Einbau in das Fahrzeug auf eine definierte Höhe einstellbar, welche z. B. über eine Kontermutter sicherbar ist.

Aus der DE 10 2004 010 628 A1 ist ein justierbarer Anschlagpuffer bekannt, welcher an einem Verdeckkastendeckel montiert ist. Der Anschlagpuffer dient zum Positionieren des Verdeckkastendeckels an weiteren Bauteilen einer Verdeckeinrichtung. Darüber hinaus ist aus der EP 1 197 368 A2 ein Anschlagpuffer zur Begrenzung eines Höhenversatzes an einer Hutablage bekannt.

Mit den vorbeschriebenen Lösungen sind Abdeckelemente von Ablagebereichen, in denen Verdeckeinrichtungen von Cabrioletfahrzeugen ablegbar sind, jeweils nur in einer Position definiert anordenbar. Dies ist jedoch oftmals nicht ausreichend, da derartige Abdeckelemente bei geöffneter Verdeckeinrichtung und bei geschlossener Verdeckeinrichtung nicht in derselben Position angeordnet werden.

Der vorliegenden Erfindung liegt daher die Aufgabe zugrunde, eine Vorrichtung zum wenigstens teilweisen Abdecken eines Öffnungsquerschnittes eines Ablagebereiches einer Verdeckeinrichtung eines Cabriolets mit wenigstens einem Abdeckelement zur Verfügung zu stellen, mittels welcher ein Abdeckelement betriebszustandsabhängig in mehreren definierten Positionen haltbar ist.

Erfindungsgemäß wird diese Aufgabe mit einer Vorrichtung gemäß den Merkmalen des Patentanspruchs 1 gelöst.

Die erfindungsgemäße Vorrichtung zum wenigstens teilweisen Abdecken eines Öffnungsquerschnittes eines Ablagebereiches einer Verdeckeinrichtung eines Cabriolets ist mit wenigstens einem Abdeckelement ausgebildet. Das Abdeckelement ist wenigstens zwischen einer den Öffnungsquerschnitt freigebenden und den Öffnungsquerschnitt wenigstens teilweise abdeckenden Position verfahrbar ausgeführt. Zusätzlich ist dem Abdeckelement eine Anschlageinrichtung zugeordnet, mittels der das Abdeckelement bei einen Fahrzeuginnenraum des Cabriolets überdeckender Verdeckeinrichtung in einer ersten Abdeckstellung und in den Fahrzeuginnenraum freigebendem Betriebszustand der Verdeckeinrichtung in einer zweiten Abdeckstellung gehalten ist.

Mit der erfindungsgemäßen Vorrichtung ist wenigstens ein Abdeckelement, vorzugsweise ein Verdeckkastendeckel oder eine Gestängeklappe an vorzugsweise unterschiedlich hohen Aufstandsflächen sicher und stabil abstützbar, wobei dies in Abhängigkeit des Betriebszustandes der Verdeckeinrichtung erfolgt.

Die Vorrichtung nach der Erfindung stellt eine Funktionsintegration einer Anschlageinrichtung in eine an sich bekannte Verdeckkinematik dar, wobei im Wesentlichen keine zusätzlichen Antriebsmechanismen und -steuerungen für einen Anschlagpuffer vorzusehen sind. Zusätzlich kann auf eine besonders steife Auslegung oder auf selbsthemmende Antriebe für einen Anschlagpuffer verzichtet werden.

Bei einer vorteilhaften Ausführungsform der erfindungsgemäßen Vorrichtung ist das Abdeckelement mit einem Anschlagelement ausgebildet, das über wenigstens eine Anschlagfläche mit wenigstens zwei Anschlagflächen der Anschlageinrichtung zusammenwirkt, wobei die Anschlagfläche des Anschlagelements in der ersten Abdeckstellung des Abdeckelements an der ersten Anschlagfläche der Anschlageinrichtung und in der zweiten Abdeckstellung an der zweiten Anschlagfläche der Anschlageinrichtung anliegt.

Alternativ hierzu ist es bei einer weiteren vorteilhaften Ausführungsform der Vorrichtung nach der Erfindung vorgesehen, dass das Abdeckelement mit einem Anschlagelement ausgebildet ist, das über wenigstens zwei Anschlagflächen mit wenigstens einer Anschlagfläche der Anschlageinrichtung zusammenwirkt, wobei die Anschlagfläche der Anschlageinrichtung in der ersten Abdeckstellung des Abdeckelements an der ersten Anschlagfläche des Anschlagelements und in der zweiten Abdeckstellung an der zweiten Anschlagfläche des Anschlagelements anliegt.

Vorteilhafte Weiterbildungen der erfindungsgemäßen Vorrichtung sind dadurch gekennzeichnet, dass die beiden Anschlagflächen der Anschlageinrichtung oder die beiden Anschlagflächen des Anschlagelements nebeneinander und in Bezug auf eine Flächennormale zueinander versetzt angeordnet sind, so dass das Abdeckelement in seiner ersten Abdeckstellung mit einer stärkeren Neigung als in seiner zweiten Abdeckstellung angeordnet ist.

Um Fertigungstoleranzen ausgleichen zu können und eine Montage des Abdeckelements sowie der damit zusammenwirkenden Anschlageinrichtung und des Anschlagelements vereinfachen zu können, ist es bei vorteilhaften Weiterbildungen der Vorrichtung nach der Erfindung vorgesehen, dass eine Anordnung zwischen der Anschlagfläche des Anschlagelements und den Anschlagflächen der Anschlageinrichtung oder zwischen den Anschlagflächen des Anschlagelements und der Anschlagfläche der Anschlageinrichtung variierbar ist.

Bei einer weiteren vorteilhaften Ausgestaltung der Vorrichtung nach der Erfindung ist das Abdeckelement zwischen seiner die Querschnittsöffnung abdeckenden und die Querschnittsöffnung freigebenden Stellung um eine sich in Fahrzeugquerrichtung erstreckende Schwenkachse verschwenkbar und wenigstens annähernd in Richtung einer Fahrzeughochachse translatorisch verfahrbar ausgeführt, um einen von der Verdeckeinrichtung während einer Öffnungs- oder Schließbewegung zu durchquerenden Bereich auf einfache und kostengünstige Art und Weise freizugeben, wobei das Abdeckelement vorzugsweise über ein motorisch antreibbares Spindel-Mutter-System zumindest in Fahrzeughochrichtung translatorisch verfahrbar ist.

Bei einer vorteilhaften Weiterbildung der Vorrichtung nach der Erfindung ist die wenigstens eine Anschlagfläche der Anschlageinrichtung im Bereich eines beweglich ausgebildeten Hebelelements der Anschlageinrichtung angeordnet und wenigstens eine Anschlagfläche des Anschlagelements des Abdeckelements liegt an der Anschlagfläche des Hebelelements der Anschlageinrichtung in der ersten Abdeckstellung des Abdeckelements an.

Zusätzlich ist die Anschlageinrichtung bei einer vorteilhaften Weiterbildung der erfindungsgemäßen Vorrichtung mit einem Halteelement ausgebildet, das eine Anschlagfläche aufweist, an der das Abdeckelement mit seiner Anschlagfläche in seiner zweiten Abdeckstellung anliegt.

Alternativ hierzu sind bei einer weiteren Ausführungsform der erfindungsgemäßen Vorrichtung die beiden Anschlagflächen der Anschlageinrichtung im Bereich des Hebelelements vorgesehen und die Anschlagfläche des Anschlagelements liegt in der ersten Abdeckstellung des Abdeckelements an einer ersten Anschlagfläche des Hebelelements und in der zweiten Abdeckstellung des Abdeckelements an einer zweiten Anschlagfläche des Hebelelements an.

Bei einer konstruktiv einfachen Ausführungsform der Vorrichtung nach der Erfindung ist das Hebelelement über ein Mitnahmeelement des Abdeckelements während einer Schwenkbewegung des Abdeckelements aus Betriebszuständen, in denen die Anschlagfläche oder die Anschlagflächen der Anschlageinrichtung mit den Anschlagflächen oder der Anschlagfläche des Abdeckelements in Wirkverbindung bringbar ist, in einen weiteren Betriebszustand, in dem die Anschlagfläche oder die Anschlagflächen der Anschlageinrichtung mit den Anschlagflächen oder der Anschlagfläche des Abdeckelements nicht in Wirkverbindung bringbar ist, ohne zusätzlichen Steuer- und Regelaufwand überführbar.

Bei einer weiteren vorteilhaften Ausführungsform der erfindungsgemäßen Vorrichtung ist das Hebelelement mittels des Mitnahmeelements des Abdeckelements entgegen einer Federkraft einer Federeinrichtung aus den Betriebszuständen in den weiteren Betriebszustand überführbar.

Alternativ hierzu ist das Hebelelement bei einer weiteren vorteilhaften Ausführungsform der erfindungsgemäßen Vorrichtung durch ein in Abhängigkeit eines Betriebszustandes der Verdeckeinrichtung betätigbares Steuerelement entgegen einer Federkraft einer Federeinrichtung aus den Betriebszuständen in den weiteren Betriebszustand überführbar.

Eine mit geringem Steuer- und Regelaufwand betreibbare Ausführungsform der Vorrichtung nach der Erfindung ist dadurch gekennzeichnet, dass das Hebelelement mit einem Hebelarm ausgebildet ist, der eine gabelförmige Aussparung aufweist, wobei die Aussparung und ein Durchmesser einer Spindel des Spindel-Mutter-Systems sowie äußere Abmessungen einer Hülse des Spindel-Mutter-Systems derart aufeinander abgestimmt sind, dass die Spindel von dem Hebelelement im Bereich der Aussparung umgreifbar ist, während das Hebelelement mit seinen die Aussparung begrenzenden freien Enden des Hebelelements an der Umfangsfläche der Hülse des Spindel-Mutter-Systems anliegt. Damit wird auf einfache Art und Weise gewährleistet, dass das Hebelelement in Abhängigkeit seiner Stellung unterschiedliche Drehstellungen einnimmt und jeweils mit der ersten Anschlagfläche oder der zweiten Anschlagfläche mit der Anschlagfläche des Anschlagelements zusammenwirkt.

Weitere Vorteile und vorteilhafte Weiterbildungen der Erfindung ergeben sich aus den Patentansprüchen und den unter Bezugnahme auf die Zeichnung prinzipmäßig beschriebenen Ausführungsbeispielen, wobei zugunsten der Übersichtlichkeit in der Beschreibung der Ausführungsbeispiele für bau- und funktionsgleiche Bauteile dieselben Bezugzeichen verwendet werden.

Es zeigt:
- Fig. 1: eine stark schematisierte Teilseitenansicht eines Cabriolets;
- Fig. 2a bis Fig. 2h: mehrere perspektivische Ansichten einer Vorrichtung zum Abdecken des Cabriolets gemäß Fig. 1 in verschiedenen Betriebszuständen;
- Fig. 3a bis Fig. 3e: die Vorrichtung des Cabriolets gemäß Fig. 1 in einer Teillängsschnittansicht mit einem Spindel-Mutter-System in verschiedenen Betriebszuständen;
- Fig. 4a bis Fig. 4c: die Vorrichtung des Cabriolets gemäß Fig. 1 in einer weiteren Teillängsschnittansicht in verschiedenen Betriebszuständen;
- Fig. 5: ein erstes Ausführungsbeispiel eines Hebelelements einer dem Abdeckelement des Cabriolets gemäß Fig. 1 zugeordneten Anschlageinrichtung; und
- Fig. 6: ein zweites Ausführungsbeispiel des Hebelelements mit zwei Anschlagflächen.

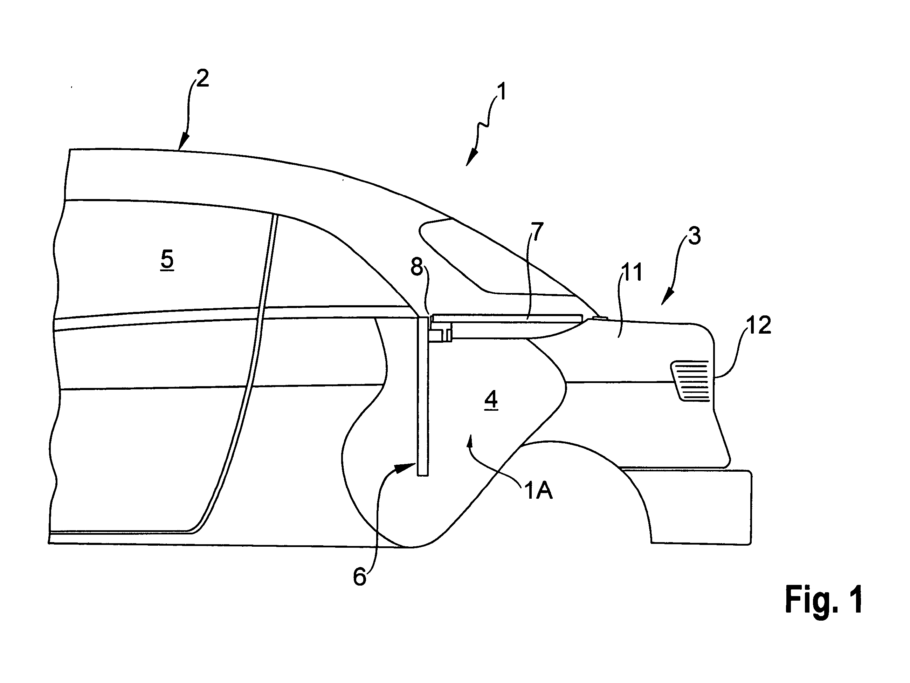

In Fig. 1 ist ein Cabriolet 1 mit einer Verdeckeinrichtung 2 in einer zweidimensionalen Teilseitenansicht gezeigt. Die Verdeckeinrichtung 2 ist in einem heckseitigen Bereich 3 angeordneten Ablagebereich 4 ablegbar und bei dem in Fig. 1 dargestellten Ausführungsbeispiel des Cabriolets 1 als Softtop ausgeführt. In Abhängigkeit des jeweils vorliegenden Anwendungsfalles ist die Verdeckeinrichtung auch als Hartschalenverdeck bzw. als ein sogenanntes RHT (Retractable-Hard-Top)ausführbar und in geeigneter Art und Weise im Ablagebereich 4 bei geöffnetem Fahrzeugdach ablegbar.

Die Verdeckeinrichtung 2 ist in an sich bekannter Art und Weise mit seitlichen Gestängeteilen versehen und über ein Hauptlager an jeder Fahrzeugseite gelenkig mit der Fahrzeugkarosserie verbunden.

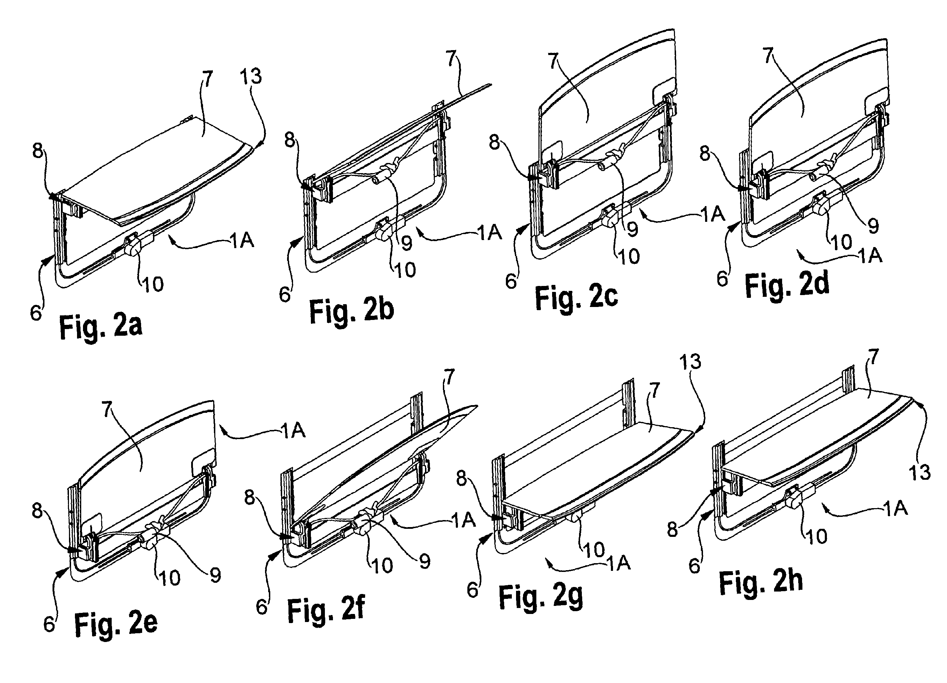

In einem einem Fahrzeuginnenraum 5 zugewandten Bereich des Ablagebereiches 4 ist ein fest mit der Fahrzeugkarosserie verbundenes Spindel-Mutter-System 6 einer Vorrichtung 1A zum Abdecken des Ablagebereiches 4 angeordnet, mittels welchem ein Abdeckelement 7 in Fahrzeughochrichtung translatorisch verschiebbar ist. Des Weiteren ist das Abdeckelement 7 um eine in Fahrzeugquerrichtung verlaufende Schwenkachse schwenkbar ausgeführt, so dass das Abdeckelement 7 in der in Fig. 2a bis Fig. 2h dargestellten Art und Weise zwischen einer den Öffnungsquerschnitt des Ablagebereiches 4 freigebenden und den Öffnungsquerschnitt wenigstens teilweise abdeckenden Position verfahrbar ist, wobei sich das Abdeckelement 7 in der in Fig. 1 dargestellten Stellung in seiner etwa waagerechten Hutablagestellung befindet, in der der Ablagebereich 4 vom Fahrzeuginnenraum 5 getrennt ist. Diese Stellung des Abdeckelements 7 wird nachfolgend als erste Abdeckstellung bezeichnet.

Die in Fig. 2a bis Fig. 2h dargestellte Anordnung stellt vorliegend ein komplett vormontiertes Verdeckdeckelmodul bzw. ein Ausführungsbeispiel der Vorrichtung 1A dar, welche größtenteils dem in der DE 10 2006 054 397.1 näher beschriebenen Verdeckdeckelmodul entspricht, auf welche vorliegend vollinhaltlich Bezug genommen wird.

Das Abdeckelement 7 befindet sich in der in Fig. 2a dargestellten Position in einer zweiten Abdeckstellung, die mit einem den Fahrzeuginnenraum 5 freigebenden Betriebszustand der Verdeckeinrichtung 2 korrespondiert.

Liegt bei geöffnetem Fahrzeugdach eine Anforderung zum Schließen des Fahrzeugdaches bzw. der Verdeckeinrichtung 2 vor, wird das Abdeckelement 7 aus der in Fig. 2a dargestellten Position mittels eines in Fig. 2b näher dargestellten ersten Elektromotors 9 in die in Fig. 2c näher dargestellte wenigstens annähernd vertikale Stellung verschwenkt und anschließend mittels des Spindel-Mutter-Systems 6, das von einem zweiten Elektromotor 10 angetrieben wird, in die in Fig. 2e in Bezug auf eine Fahrzeughochachse translatorisch nach unten verschobene und im Wesentlichen wenigstens annähernd vertikale Stellung verfahren, um einen Schwenkbereich der Verdeckeinrichtung 2 freizugeben.

Anschließend wird das Abdeckelement 7 in der in Fig. 2f dargestellten Art und Weise aus der vertikalen Position gemäß Fig. 2e in die in Fig. 2g dargestellte waagerechte Position innerhalb des Ablagebereiches 4 um die Schwenkachse 8 verschwenkt und daran anschließend über das Spindel-Mutter-System 6 in Fahrzeughochrichtung nach oben verfahren, um den Öffnungsquerschnitt des Ablagebereiches 4 wenigstens teilweise abzudecken. Wiederum daran anschließend wird ein weiteres Abdeckelement bzw. ein Kofferdeckel 11 des Cabriolets 1 um eine heckseitig angeordnete Schwenkachse 12 aus einer aufgestellten Position in Richtung der in Fig. 1 dargestellten waagerechten Position verschwenkt und dichtend auf dem heckseitigen Bereich der Verdeckeinrichtung 2 abgelegt. Die Verdeckeinrichtung 2 ist hierfür mit einer nicht näher dargestellten Dichteinrichtung ausgebildet, um den Bereich zwischen der Verdeckeinrichtung 2 und dem Kofferdeckel 11 gegen Schmutz und Feuchtigkeit abzudichten.

Liegt bei geschlossenem Fahrzeugdach eine Anforderung zum Öffnen der Verdeckeinrichtung 2 vor, wird das Abdeckelement 7 im Wesentlichen in umgekehrter Reihenfolge aus der in Fig. 2h dargestellten Position in die in Fig. 2a dargestellte Stellung überführt, wobei der Kofferdeckel 11 bei geöffneter Verdeckeinrichtung 2 mit seiner einem heckseitigen Bereich des Abdeckelements 7 zugewandten Unterseite an dem Abdeckelement 7 anliegt und mit einer Dichteinrichtung 13 des Abdeckelements 7 dichtend zusammenwirkt, womit auch bei geöffnetem Fahrzeugdach ein Staubeintrag sowie ein Eindringen von Feuchtigkeit in den innerhalb der Fahrzeugkarosserie angeordneten Ablagebereich 4 auf einfache und wirkungsvolle Art und Weise vermieden wird.

Bei geschlossenem Fahrzeugdach liegt das Abdeckelement 7 mit seiner Dichteinrichtung 13 an dem heckseitigen Bereich der Verdeckeinrichtung 2 dichtend an, um einen Schmutz- sowie Feuchtigkeitseintritt in den Ablagebereich 4 zu vermeiden.

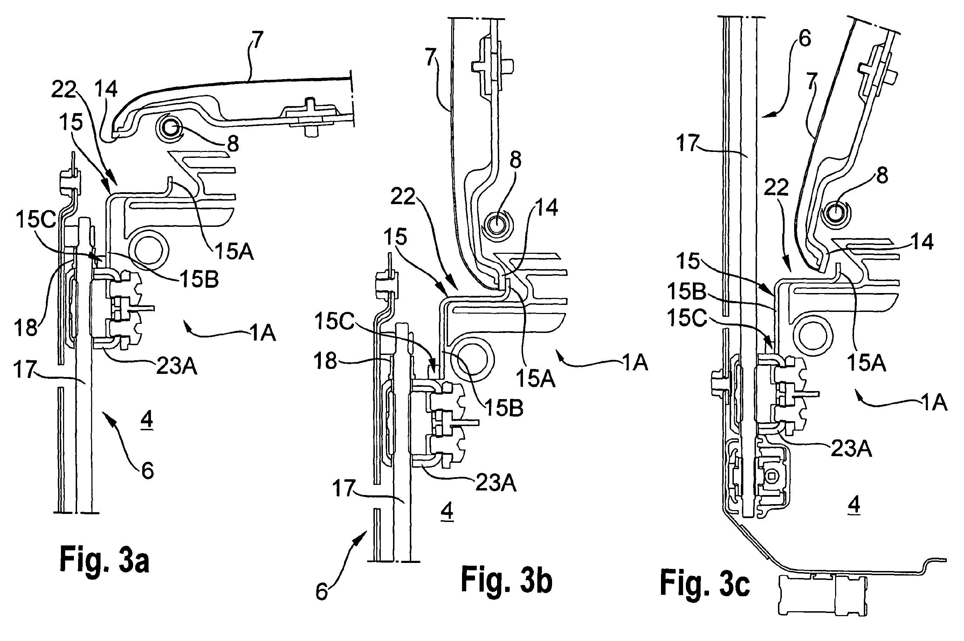

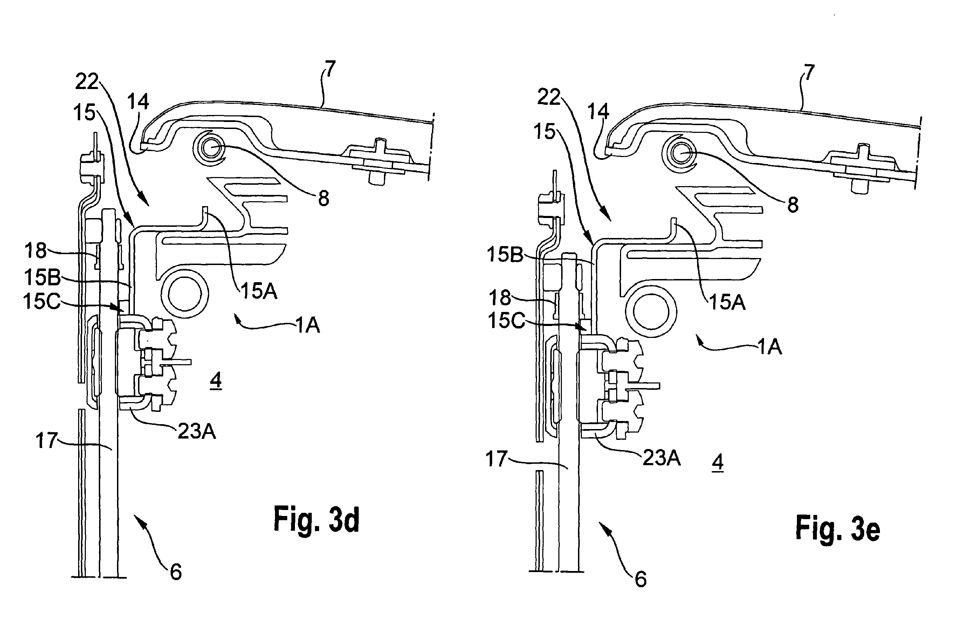

In Fig. 3a bis Fig. 3e sind das Spindel-Mutter-System 6 sowie das Abdeckelement 7 der Vorrichtung 1A jeweils in einer schematisierten Teillängsschnittansicht in der ersten Abdeckstellung, in der zweiten Abdeckstellung und in weiteren verschiedenen Stellungen gezeigt, welche das Abdeckelement 7 bei Vorliegen einer Anforderung zum Öffnen oder Schließen der Verdeckeinrichtung 2 zwischen der ersten und zweiten Abdeckstellung einnimmt.

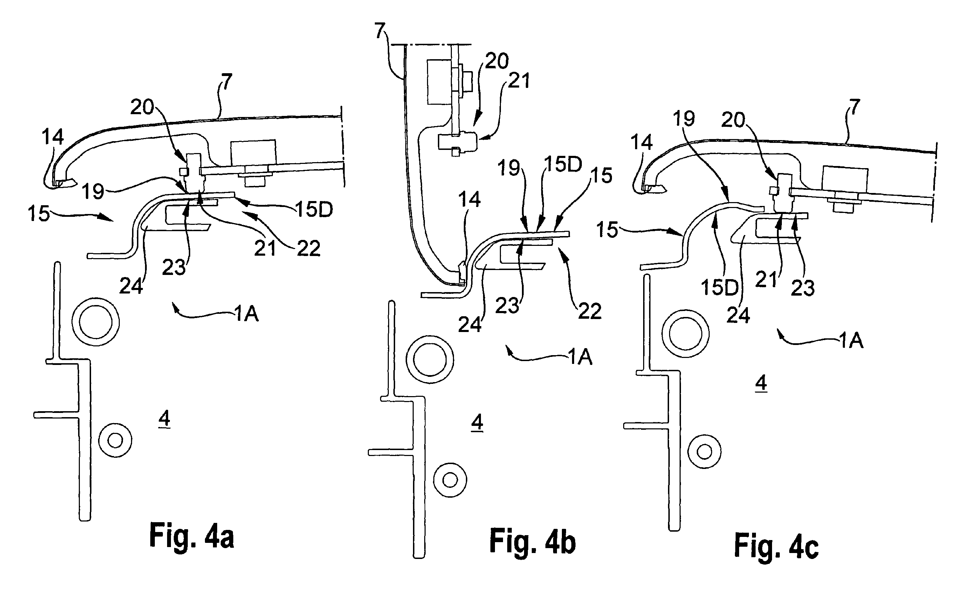

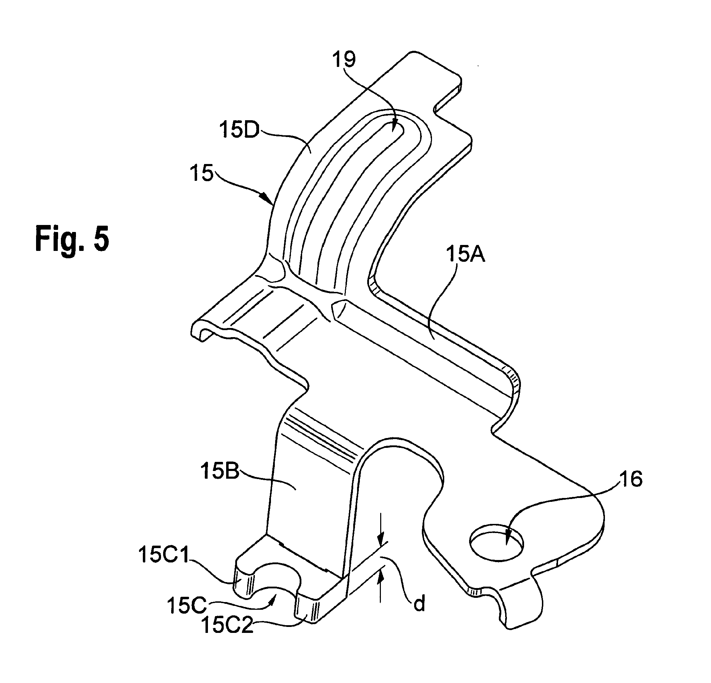

Darüber hinaus ist das Abdeckelement 7 in Fig. 4a bis Fig. 4c in einem weiteren Teillängsschnitt in der ersten und zweiten Abdeckstellung sowie in einer wenigstens annähernd vertikal ausgerichteten Zwischenstellung gezeigt, in der das Abdeckelement 7 mit einem Mitnahmeelement 14 ein in Fig. 5 in Alleinstellung näher gezeigtes Hebelelement 15 um einen Drehpunkt 16 in der nachfolgend beschriebenen Art und Weise verdreht.

Das Abdeckelement 7 ist in Fig. 3a in der zweiten Abdeckstellung gezeigt, die mit einem geöffneten Betriebszustand der Verdeckeinrichtung 2 korrespondiert. Wird das Abdeckelement 7 in die in Fig. 3b dargestellte vertikale Stellung verbracht, kommt das Abdeckelement 7 mit seinem Mitnahmeelement 14 mit dem Hebelelement 15 in einem Bereich 15A in Anlage und verdreht dieses um den Drehpunkt 16. Das Hebelelement 15 ist mit einem Hebelarm 15B ausgebildet, der eine gabelförmige Aussparung 15C aufweist, wobei die Aussparung und ein Durchmesser einer Spindel 17 des Spindel-Mutter-Systems 6 sowie äußere Abmessungen einer Hülse 18 des Spindel-Mutter-Systems 6 derart aufeinander abgestimmt sind, dass die Spindel 17 von dem Hebelelement 15 im Bereich der Aussparung 15C umgreifbar ist, während das Hebelelement 15 mit seinen die Aussparung 15C begrenzenden freien Enden 15C1 und 15C2 des Hebelelements 15 an der Umfangsfläche der Hülse 18 des Spindel-Mutter-Systems 6 anliegt und dann um einen geringeren Winkelwert verdreht ist.

Des Weiteren ist das Hebelelement 15 mit einer Anschlagfläche 19 ausgebildet, an welcher ein in Fig. 4a bis Fig. 4c dargestelltes Anschlagelement 20, welches fest mit dem Abdeckelement 7 verbunden und mit diesem verschwenkbar ist, mit einer Anschlagfläche 21 in der in Fig. 4a näher dargestellten Art und Weise anliegt. In diesem Betriebszustand des Abdeckelementes 7 befindet sich das Abdeckelement 7 in seiner ersten Abdeckstellung bzw. in seiner zu dem geschlossenen Betriebszustand der Verdeckeinrichtung 2 äquivalenten Position.

Das Hebelelement 15, welches Teil einer Anschlageinrichtung 22 der Vorrichtung 1A ist, ist in der in Fig. 4a dargestellten Position zwischen einer zweiten Anschlagfläche 23 der Anschlageinrichtung 22 und der Anschlagfläche 21 des Anschlagelements 20 angeordnet, so dass das Abdeckelement 7 in der in Fig. 4a dargestellten ersten Abdeckstellung im Vergleich zu der in Fig. 4c dargestellten zweiten Abdeckstellung, in der das Anschlagelement 20 mit seiner Anschlagfläche 21 an der zweiten Anschlagfläche 23 der Anschlageinrichtung 22 anliegt, mit einer größeren Neigung in Bezug auf eine horizontal ausgerichtete Fahrzeuglängsebene angeordnet ist.

Ausgehend von dem in Fig. 3a dargestellten Betriebszustand der Anschlageinrichtung 22, in dem das Hebelelement 15 im Bereich der freien Enden 15C1 und 15C2 des Hebelarmes 15B an der Umfangsfläche der Hülse 18 anliegt, ist das Hebelelement 15 in der in Fig. 4a dargestellten Position gehalten und mit einem die erste Anschlagfläche aufweisenden Hebelarm 15D zwischen der zweiten Anschlagfläche 23 der Anschlageinrichtung 22 und der Anschlagfläche 21 des Anschlagelements 20 angeordnet. Wird das Abdeckelement 7 vom Elektromotor 9 in die in Fig. 3b bzw. Fig. 4b dargestellte vertikale Position verschoben, wird das Hebelelement 15 um den Drehpunkt 16 im Bereich des Hebelarmes 15B von der Hülse 18 wegverschwenkt und die erste Anschlagfläche 19 des Hebelelements 15 bzw. der Anschlageinrichtung 22 nach wie vor oberhalb der zweiten Anschlagfläche 23 gehalten.

Anschließend wird das Abdeckelement 7 in seiner vertikalen Position vom Spindel-Mutter-System 6 nach unten in Richtung des Ablagebereiches 4 und anschließend in der in Fig. 2c bis Fig. 2e dargestellten Art und Weise innerhalb des Ablagebereiches 4 um die Schwenkachse 8 in die in Fig. 2g dargestellte und wenigstens annähernd horizontale Stellung verschwenkt.

Dabei wird die Wirkverbindung zwischen dem Mitnahmeelement 14 des Abdeckelements 7 und dem Bereich 15A des Hebelelements 15 gelöst und das Hebelelement 15 aufgrund einer an dem Hebelelement 15 angreifenden Federkraft einer in Fig. 5 nicht näher gezeigten Federeinrichtung um den Drehpunkt 16 mit seinem Hebelarm 15B sowie seiner Aussparung 15C in Richtung der Spindel 17 des Spindel-Mutter-Systems 6 verdreht, bis die Spindel 17 in der Aussparung 15C angeordnet ist.

Die Hülse 18 ist im oberen Bereich des Ablagebereiches 4 ortsfest ausgeführt und die Spindel 17 weist einen kleineren Durchmesser als die Hülse 18 auf. Dies führt dazu, dass das Hebelelement 15 in der in Fig. 3c dargestellten Position des Abdeckelements 7 um einen größeren Drehwinkelbereich verdreht ist als in der in Fig. 3e gezeigten Anordnung.

Das Hebelelement 15 wird dadurch mit seiner Anschlagfläche 19 aus dem Bereich der zweiten Anschlagfläche 23 der Anschlageinrichtung 22 geführt. Das Abdeckelement 7 bzw. dessen Anschlagelement 20 liegt dann in der den Ablagebereich 4 abdeckenden Stellung des Abdeckelementes 7 mit seiner Anschlagfläche 21 an der zweiten Anschlagfläche 23 der Anschlageinrichtung 22 in der in Fig. 3e bzw. Fig. 4c dargestellten Stellung an, womit sich das Abdeckelement 7 in seiner zweiten Abdeckstellung befindet.

Da das Hebelelement 15 mit seinem Hebelarm 15B die Spindel 17 in der ersten Abdeckstellung des Abdeckelements 7 umgreift, ist das Abdeckelement 7 in seiner ersten Abdeckstellung in Bezug auf eine Fahrzeughochachse tiefer als in seiner zweiten Abdeckstellung positioniert. Dies resultiert aus der Tatsache, dass die die Aussparung 15C begrenzenden freien Enden 15C1 und 15C2 in der in Fig. 3e näher dargestellten Art und Weise zwischen einer Mutter 23A des Spindel-Mutter-Systems 6 und der Hülse 18 angeordnet ist und der translatorische Verschiebeweg des Abdeckelements 7 in vertikaler Richtung im Vergleich zur zweiten Abdeckstellung des Abdeckelements 7 um die Bauteilstärke d des Hebelelements 15 im Bereich der Aussparung 15C verringert ist.

Die dem Fahrzeuginnenraum 5 zugewandte Seite des Abdeckelements 7 ist in der ersten Abdeckstellung aufgrund der größeren Neigung in Fahrzeughochrichtung stärker nach oben verschwenkt als in der zweiten Abdeckstellung des Abdeckelements 7. Damit ist ein Stoßbereich zwischen der dem Fahrzeuginnenraum 5 zugewandten Querseite des Abdeckelements 7 und einem zwischen dem Fahrzeuginnenraum 5 und dem Abdeckelement 7 angeordneten Karosseriebereich in derselben Art und Weise wie in der zweiten Abdeckstellung des Abdeckelements 7 auf konstruktiv einfache Art und Weise bündig darstellbar, da eine aufwändige Steuerung bzw. Regelung des zweiten Elektromotors 10 hierfür nicht erforderlich ist.

Die zweite Anschlagfläche 23 der Anschlageinrichtung 22 ist im Bereich eines Bauteils bzw. eines Halteelements 24 vorgesehen, dessen Position in Bezug auf das Abdeckelement 7 gleich bleibt, da das Halteelement mit dem Spindel-Mutter-System 6 wirkverbunden ist und während einer in Bezug auf eine Fahrzeugbodenebene vertikalen Bewegung des Abdeckelementes 7 ebenfalls in vertikaler Richtung verfahren wird und ansonsten einen festen Anschlag für das Anschlagelement 20 des Abdeckelementes 7 darstellt.

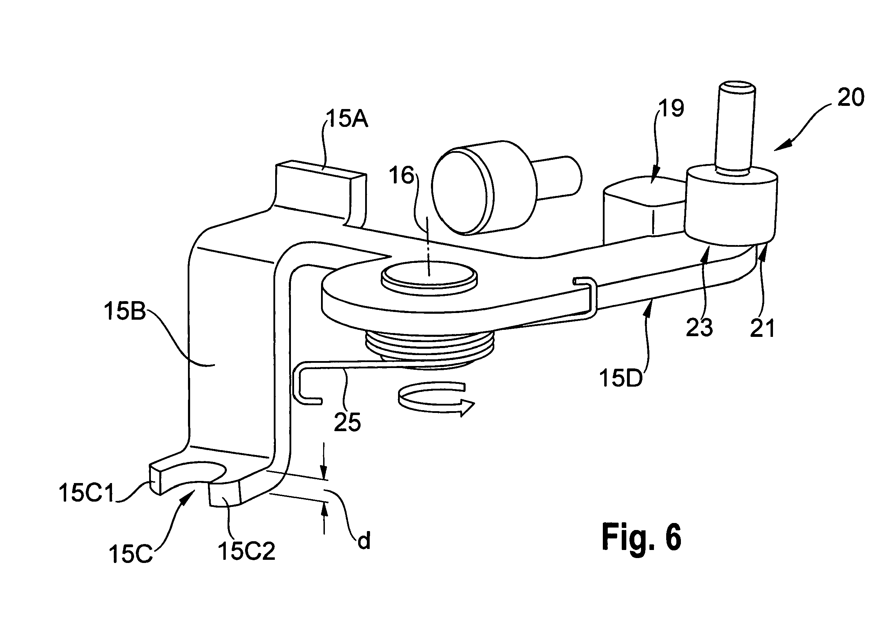

Ist die Anschlageinrichtung 22 aufgrund konstruktiver Gegebenheiten im Bereich des Ablagebereiches 4 der Fahrzeugkarosserie nicht mit einem karosseriefesten Anschlag bzw. der zweiten Anschlagfläche 23 im Bereich der Fahrzeugkarosserie ausführbar, ist die Anschlageinrichtung 22 mit einem in Fig. 6 dargestellten Hebelelement 15 ausgebildet, welches sich von dem in Fig. 5 gezeigten Hebelelement 15 im Bereich des die erste Anschlagfläche 19 aufweisenden Hebelarmes 15D unterscheidet.

Das Hebelelement 15 gemäß Fig. 6 ist im Bereich des zweiten Hebelarmes 15D neben der ersten Anschlagfläche 19 auch mit der zweiten Anschlagfläche 23 der Anschlageinrichtung 22 ausgeführt.

Das Hebelelement 15 gemäß Fig. 6 wird in derselben Art und Weise wie das Hebelelement 15 gemäß Fig. 5 von dem Mitnahmeelement 14 des Abdeckelements 7 um den Drehpunkt 16 verdreht, wobei die Anschlagfläche 21 des Anschlagelements 20 in der ersten Abdeckstellung des Abdeckelements 7 an der ersten Anschlagfläche 19 des Hebelelements 15 und in der zweiten Abdeckstellung an der zweiten Anschlagfläche 23 des Hebelelements 15 anliegt. Zudem wird das Hebelelement 15 im nicht durch das Mitnahmeelement 14 des Abdeckelements 7 betätigten Zustand von der in Fig. 6 dargestellten und als Schenkelfeder ausgeführten Federeinrichtung 25 mit seinem Hebelarm 15B in Richtung des Spindel-Mutter-Systems 6 verdreht.

Alternativ zu der in der Zeichnung dargestellten Betätigung des Hebelelements 15 ist es bei einer weiteren in der Zeichnung nicht näher dargestellten Ausführungsform der erfindungsgemäßen Vorrichtung vorgesehen, dass in Bezug auf eine Fahrzeugbodenebene im oberen Bereich des Ablagebereiches der Verdeckeinrichtung des Cabriolets ein Steuerelement angeordnet ist, welches das Hebelelement in die jeweils gewünschte Stellung führt und das Abdeckelement in Abhängigkeit des jeweils vorliegenden Betriebszustands der Verdeckeinrichtung in der jeweils gewünschten Stellung gehalten ist. Die dachstellungsabhängige Ansteuerung des Hebelelements ist beispielsweise über ein als ausfahrbare Rampe ausgebildetes Steuerelement realisierbar.

## Patentansprüche

1. Vorrichtung (1A) zum wenigstens teilweisen Abdecken eines Öffnungsquerschnittes eines Ablagebereiches (4) einer Verdeckeinrichtung (2) eines Cabriolets (1) mit wenigstens einem Abdeckelement (7), welches wenigstens zwischen einer den Öffnungsquerschnitt freigebenden und den Öffnungsquerschnitt wenigstes teilweise abdeckenden Position verfahrbar ausgeführt ist,
**dadurch gekennzeichnet,**
**dass** dem Abdeckelement (7) eine Anschlageinrichtung (22) zugeordnet ist, wobei das Abdeckelement (7) von der Anschlageinrichtung (22) bei einen Fahrzeuginnenraum (5) des Cabriolets (1) überdeckender Verdeckeinrichtung (2) in einer ersten Abdeckstellung und in den Fahrzeuginnenraum (5) freigebendem Betriebszustand der Verdeckeinrichtung (2) in einer zweiten Abdeckstellung gehalten ist.

2. Vorrichtung nach Anspruch 1,
**dadurch gekennzeichnet,**
**dass** das Abdeckelement (7) mit einem Anschlagelement (20) ausgebildet ist, das über wenigstens eine Anschlagfläche (21) mit wenigstens zwei Anschlagflächen (19, 23) der Anschlageinrichtung (22) zusammenwirkt, wobei die Anschlagfläche (21) des Anschlagelements (20) in der ersten Abdeckstellung des Abdeckelements (7) an der ersten Anschlagfläche (19) der Anschlageinrichtung (22) und in der zweiten Abdeckstellung an der zweiten Anschlagfläche (23) der Anschlageinrichtung (22) anliegt.

3. Vorrichtung nach Anspruch 2,
**dadurch gekennzeichnet,**
**dass** die beiden Anschlagflächen (19, 23) der Anschlageinrichtung (22) nebeneinander und in Bezug auf eine Flächennormale zueinander versetzt angeordnet sind, so dass das Abdeckelement (7) in seiner ersten Abdeckstellung mit einer stärkeren Neigung als in seiner zweiten Abdeckstellung angeordnet ist.

4. Vorrichtung nach Anspruch 2 oder 3,
**dadurch gekennzeichnet,**
**dass** eine Anordnung zwischen der Anschlagfläche (21) des Anschlagelements (20) und den Anschlagflächen (19, 23) der Anschlageinrichtung (22) variierbar ist.

5. Vorrichtung nach Anspruch 1,
**dadurch gekennzeichnet,**
**dass** das Abdeckelement mit einem Anschlagelement ausgebildet ist, das über wenigstens zwei Anschlagflächen mit wenigstens einer Anschlagfläche der Anschlageinrichtung zusammenwirkt, wobei die Anschlagfläche der Anschlageinrichtung in der ersten Abdeckstellung des Abdeckelements an der ersten Anschlagfläche des Anschlagelements und in der zweiten Abdeckstellung an der zweiten Anschlagfläche des Anschlagelements anliegt.

6. Vorrichtung nach Anspruch 5,
**dadurch gekennzeichnet,**
**dass** die beiden Anschlagflächen des Anschlagelements nebeneinander und in Bezug auf eine Flächennormale zueinander versetzt angeordnet sind, so dass das Abdeckelement in seiner ersten Abdeckstellung mit einer stärkeren Neigung als in seiner zweiten Abdeckstellung angeordnet ist.

7. Vorrichtung nach Anspruch 5 oder 6,
**dadurch gekennzeichnet,**
**dass** eine Anordnung zwischen der Anschlagfläche der Anschlageinrichtung und den Anschlagflächen des Anschlagelements variierbar ist.

8. Vorrichtung nach einem der Ansprüche 2 bis 4,
**dadurch gekennzeichnet,**
**dass** wenigstens eine Anschlagfläche (19) der Anschlageinrichtung (22) im Bereich eines beweglich ausgebildeten Hebelelements (15) der Anschlageinrichtung (22) angeordnet ist und wenigstens eine Anschlagfläche (21) des Anschlagelements (20) des Abdeckelements (7) an der Anschlagfläche (19) des Hebelelements (15) der Anschlageinrichtung in der ersten Abdeckstellung des Abdeckelements (7) anliegt.

9. Vorrichtung nach einem der Ansprüche 2 bis 4 oder 8,
**dadurch gekennzeichnet,**
**dass** die Anschlageinrichtung (22) ein Halteelement (25) aufweist, das mit einer Anschlagfläche (23) der Anschlageinrichtung (22) ausgebildet ist, an der das Abdeckelement (7) mit seiner Anschlagfläche (21) in seiner zweiten Abdeckstellung anliegt.

10. Vorrichtung nach einem der Ansprüche 2 bis 4 oder 8,
**dadurch gekennzeichnet,**
**dass** beide Anschlagflächen (19, 23) der Anschlageinrichtung (22) im Bereich des Hebelelements (15) vorgesehen sind und die Anschlagfläche (21) des Anschlagelements (20) in der ersten Abdeckstellung des Abdeckelements (7) an einer ersten Anschlagfläche (19) des Hebelelements (15) und in der zweiten Abdeckstellung des Abdeckelements (7) an einer zweiten Anschlagfläche (23) des Hebelelements (15) anliegt.

11. Vorrichtung nach einem der Ansprüche 8 bis 10,
**dadurch gekennzeichnet,**
**dass** das Hebelelement (15) über ein Mitnahmeelement (14) des Abdeckelements (7) während einer Schwenkbewegung des Abdeckelements (7) aus Betriebszuständen, in denen die Anschlagfläche (19) oder die Anschlagflächen (19, 23) der Anschlageinrichtung (22) mit den Anschlagflächen oder der Anschlagfläche (21) des Abdeckelements (7) in Wirkverbindung bringbar ist, in einen weiteren Betriebszustand, in dem die Anschlagfläche (19) oder die Anschlagflächen (19, 23) der Anschlageinrichtung (22) mit den Anschlagflächen oder der Anschlagfläche (21) des Abdeckelements (20) nicht in Wirkverbindung bringbar ist, überführbar ist.

12. Vorrichtung nach einem der Ansprüche 8 bis 10,
**dadurch gekennzeichnet,**
**dass** das Hebelelement durch ein in Abhängigkeit eines Betriebszustandes der Verdeckeinrichtung betätigbares Steuerelement entgegen einer Federkraft einer Federeinrichtung aus den Betriebszuständen in den weiteren Betriebszustand überführbar ist.

13. Vorrichtung nach einem der Ansprüche 8 bis 12,
**dadurch gekennzeichnet,**
**dass** das Hebelelement (15) mittels des Mitnahmeelements (14) des Abdeckelements (7) entgegen einer Federkraft einer Federeinrichtung (25) aus den Betriebszuständen in den weiteren Betriebszustand überführbar ist.

14. Vorrichtung nach einem der Ansprüche 1 bis 13,
**dadurch gekennzeichnet,**
**dass** das Abdeckelement (7) über ein motorisch antreibbares Spindel-Mutter-System (6) translatorisch verfahrbar ausgebildet ist.

15. Vorrichtung nach Anspruch 14,
**dadurch gekennzeichnet,**
**dass** das Hebelelement mit einem Hebelarm (15B) ausgebildet ist, der eine gabelförmige Aussparung (15C) aufweist, wobei die Aussparung (15C) und ein Durchmesser einer Spindel (17) des Spindel-Mutter-Systems (6) sowie äußere Abmessungen einer Hülse (18) des Spindel-Mutter-Systems (6) derart aufeinander abgestimmt sind, dass die Spindel (17) von dem Hebelelement (15) im Bereich der Aussparung (15C) umgreifbar ist, während das Hebelelement (15) mit seinen die Aussparung begrenzenden freien Enden (15C1, 15C2) an der Umfangsfläche der Hülse (18) des Spindel-Mutter-Systems (6) anliegt.

16. Vorrichtung nach einem der Ansprüche 1 bis 15,
**dadurch gekennzeichnet,**
**dass** das Abdeckelement (7) in Bezug auf eine Fahrzeugbodenebene in seiner zweiten Abdeckstellung höher als in seiner ersten Abdeckstellung angeordnet ist.

17. Vorrichtung nach einem der Ansprüche 1 bis 16,
**dadurch gekennzeichnet,**
**dass** das Abdeckelement (7) zwischen seiner die Querschnittsöffnung abdeckenden und die Querschnittsöffnung freigebenden Stellung um eine sich in Fahrzeugquerrichtung erstreckende Schwenkachse (8) verschwenkbar und wenigstens annähernd in Richtung einer Fahrzeughochachse translatorisch verfahrbar ausgeführt ist.

18. Vorrichtung nach einem der Ansprüche 1 bis 17,
**dadurch gekennzeichnet,**
**dass** das Abdeckelement (7) mit einer Dichteinrichtung (13) ausgebildet ist, mittels der der Ablagebereich (4) in der zweiten Abdeckstellung des Abdeckelements (7) in einem Bereich zwischen dem Abdeckelement (7) und einem sich in Fahrzeuglängsrichtung im Bereich eines Fahrzeughecks anschließenden weiteren Abdeckelement (11) abdichtbar ist.
